# EUROPÄISCHE PATENTSCHRIFT

(11) **EP 2 442 935 B1**
(45) Veröffentlichungstag und Bekanntmachung des Hinweises auf die Patenterteilung: **04.05.2016**
(21) Anmeldenummer: 10712321.8
(22) Anmeldetag: 11.03.2010
(51) Int. Cl.: B23D 45/12, B23D 47/04

(54) **TRENNVORRICHTUNG**
SEPARATING DEVICE
DISPOSITIF DE SÉPARATION

(30) Priorität: 06.05.2009 DE 102009019857
(43) Veröffentlichungstag der Anmeldung: 25.04.2012
(73) Patentinhaber: Weidner, Andreas, 72514 Inzigkofen-Vilsingen (DE)
(72) Erfinder: Weidner, Andreas, 72514 Inzigkofen-Vilsingen (DE)
(74) Vertreter: Patentanwälte und Rechtsanwalt Weiß, Arat & Partner mbB
(86) Internationale Anmeldenummer: PCT/EP2010/001526
(87) Internationale Veröffentlichungsnummer: WO 2010/127737

(56) Entgegenhaltungen:
- EP-A1- 2 206 569
- WO-A1-03/035315
- WO-A1-2008/028211
- US-A- 5 842 393

## Beschreibung

Die vorliegende Erfindung betrifft eine Trennvorrichtung nach dem Oberbegriff des Anspruchs 1 und ein Trennverfahren mit einer solchen Trennvorrichtung.

### Stand der Technik

Beim Herstellen von grossen Metallringen für Lager muss zunächst ein dickerer, ringförmiger Rohling hergestellt werden, von welchem dann einzelne Ringe abgetrennt werden können. Grundsätzlich muss also von einem Metallring als Werkstück ein Teilwerkstück abgetrennt werden. Dabei ist es erforderlich, möglichst plane Schnittflächen zu erzeugen, um den Aufwand einer späteren Nachbearbeitung zu reduzieren.

In diesem Zusammenhang wird auf die WO 2008/028211 A1 hingewiesen, welche eine Trennvorrichtung gemäß dem Oberbegriff des Anspruchs 1 aufzeigt, bei der eine vertikal zu einem Boden angeordnete Büchse von einem Sägeblatt von innen nach aussen in einzelne Ringe geschnitten wird.
Weiter wird auf die WO 03/035315 A1 hingewiesen, welche eine Trennvorrichtung gezeigt wird, bei der eine vertikal angeordnete Büchse von aussen durch ein Sägeblatt in einzelne Ringe geschnitten wird.
Ausserdem wird auf die US 5,842,393 hingewiesen, bei der eine Vorrichtung offenbart ist, bei der eine vertikal angeordnete Büchse von aussen abgestochen wird.
Daneben wird auf die EP 2 206 569 A1 hingewiesen, welche eine Vorrichtung aufzeigt, bei der eine vertikal eingespannte Büchse rotierend bearbeitet wird, indem verschieden Werkzeuge eingesetzt werden.

### Offenbarung der Erfindung

Aufgabe der Erfindung ist es, eine Trennvorrichtung und ein Trennverfahren anzugeben, mit welchem mit möglichst geringem Aufwand Ringe von einem ringförmigen Metallrohling abgetrennt werden können. Dabei sollte möglichst eine schnelle Bearbeitungsgeschwindigkeit und eine hohe Qualität der Trennfläche erreicht werden.

Die Aufgabe wird mit einer Trennvorrichtung nach dem Anspruch 1 und einem Trennverfahren nach dem nebengeordneten Verfahrensanspruch gelöst. Die Erfindung sieht vor, dass die Abtrenneinrichtung eine im Wesentlichen horizontale Schneidebene aufweist. Die Abtrenneinrichtung oder die Werkstoffaufnahme sind angeordnet, so dass das Teilwerkstück, also beispielsweise der abgetrennte Metallring, von dem in der Aufnahme aufgenommenem Werkstück im Wesentlichen horizontal abgetrennt wird. Die Abtrenneinrichtung und die Aufnahme sind also so angeordnet, dass eine im Wesentlichen horizontale Schneidebene erreicht wird. Dabei bedeutet der Ausdruck "im Wesentlichen horizontal" vorzugsweise einen Winkelbereich von +/- 45° um die Horizontale, bevorzugt +/- 10° und noch bevorzugter +/- 5° oder gar +/- 1° gegenüber der Horizontalen. Die Abtrenneinrichtung ist vorzugsweise dazu geeignet, das Teilwerkstück zerspanend abzutrennen. Das abgetrennte Teilwerkstück ist kreisförmig, insbesondere ringförmig, insbesondere ein Ring aus Metall, bevorzugt Stahl. Durch die horizontale Anordnung des Werkstücks wird eine sehr steife und präzise Aufnahme des Werkstücks ermöglicht, da horizontale Aufnahmen einfach auf einem Fundament angeordnet werden können, wobei als Fundament beispielsweise auch eine Werkzeugmaschine dienen kann. Die Trennvorrichtung ist geeignet, kreisförmige Scheiben oder Ringe aus Metall, bevorzugt Stahl, von mindestens 400mm, 800mm, 1200mm, 1500mm oder gar 2500mm zu zertrennen, wobei die Metallringe Randstärken zwischen bevorzugt 10mm und 500mm, bevorzugter zwischen 50mm und 250mm aufweisen oder die kreisförmigen Scheiben Durchmesser von 0mm bis 1500mm, bevorzugter von 300mm bis 1000mm aufweisen. Entsprechend sind die Werkstückaufnahme und der Manipulator und die Abtrenneinrichtung ausgebildet.

Vorzugsweise sind die Aufnahme und die Abtrenneinrichtung derart angeordnet, dass sich das Teilwerkstück oberhalb der Schneidebene befindet. Dadurch wird erreicht, dass das Werkstück einfach an einer auf dem Boden angeordneten Werkstückaufnahme befestigt werden kann. Solche Aufnahmen können mit äusserst grosser Steifigkeit ausgeführt werden, so dass eine präzise und steife Aufnahme des Werkstücks erreicht werden kann. Auf diese Weise werden Schwingungen oder Ähnliches am Werkstück unterdrückt. Vorzugsweise ist die Aufnahme dazu eingerichtet, an einer Karussell-Drehbank befestigt zu werden oder es wird eine Karussell-Drehbank als Werkstückaufnahme verwendet. Eine Karussell-Drehbank bietet den besonderen Vorteil, dass sie eine grosse Steifigkeit für die Aufnahme des Werkstücks bereitstellt und ausserdem bietet sie die Möglichkeit, dass das Werkstück um eine vertikale Achse drehbar aufgenommen wird. Allgemein wird im Rahmen der Erfindung bevorzugt, dass die Aufnahme um eine im Wesentlichen vertikale Achse drehbar ist, wobei für den Ausdruck "im Wesentlichen vertikal" wieder die oben angegebenen Winkelbereiche entsprechend für eine Winkelabweichung gegenüber der Vertikalen gelten. Besonders bevorzugt werden Ausführungsformen von Trennvorrichtungen, die eine Karussell-Drehbank oder allgemein eine drehbare Aufnahme umfassen.

Verfahrensmässig wird beim Abtrennen des Teilwerkstücks das Werkstück vorzugsweise auf der Karussell-Drehbank rotiert, so dass die Abtrenneinrichtung nicht um den vollständigen Umfang des vorzugsweise ringförmigen Werkstücks herum bewegt werden muss. Die Trennvorrichtung umfasst einen Manipulator zum Handhaben des Teilwerkstücks. Dies bietet den Vorteil, dass bei einer zunehmenden Abtrennung des Teilwerkstücks von dem Werkstück ein Einklemmen einer Säge durch das Gewicht des Teilwerkstücks vermieden werden kann. Der Manipulator umfasst vorzugsweise einen oberhalb der Werkstückaufnahme angeordneten Ausleger. Der Ausleger bietet den Vorteil, dass auf diese Weise mit dem Manipulator das Teilwerkstück von oben gegriffen werden kann, wobei Greifen allgemein im Sinne einer Handhabung zu verstehen ist. Vorteilhafterweise ist an dem Ausleger ein Manipulatorkopf lösbar befestigt. Hierzu bietet der Ausleger zweckmässigerweise eine Manipulatorkopf-Aufnahme. Dies bietet den Vorteil, dass ein Austausch des Manipulatorkopfes einfach ist. Vorzugsweise sind verschiedene Manipulatorköpfe vorgesehen, welche in einem Zwischenlager aufgenommen sind und die für jeweils unterschiedliche Werkstück-Grössen oder Werkstück-Durchmesser oder Grössenbereiche geeignet sind. Auf diese Weise ist die Trennvorrichtung einfach an verschiedene Werkstück-Grössen anpassbar.

Vorteilhafterweise umfasst der Manipulator eine Abstützung, mit welcher sich der Manipulatorkopf direkt nach unten durch eine mittige Öffnung des Werkstücks gegenüber einem Widerlager abstützen kann. Als Widerlager wird vorzugsweise ein Spannfutter der Karussell-Drehmaschine oder eine Bodenplatte verwendet. Die Abstützung bietet den Vorteil, dass der Manipulator eine stabilere Aufnahme für das Teilwerkstück bereitstellt. Dies ist insbesondere während des Abtrennvorgangs wichtig, da auf diese Weise Bewegungen des Teilwerkstücks gegenüber dem Werkstück vermieden werden können. Vorzugsweise ist der Manipulator daher geeignet, das Teilwerkstück kraftschlüssig oder formschlüssig zu greifen. Besonders bevorzugt wird, falls der Manipulator dazu geeignet ist, das Teilwerkstück mit einer Vorspannung zu haltern. Besonders bevorzugt wird dabei, dass eine Vorspannung auf einen Metallring als Teilwerkstück aufgebracht werden kann, wobei die Vorspannung von innen radial nach aussen an zumindest 3 oder bevorzugter 4 Innenflächen des Metallrings aufgebracht werden kann. Auf diese Weise wir ein Schwingen des Teilwerkstücks oder des Metallrings weitgehend vermieden.

Die Trennvorrichtung umfasst Handhabungselemente, welche geeignet sind, das Teilwerkstück von aussen oder in einer Ausnehmung des Teilwerkstücks, also bei einem Metallring als Teilwerkstück auf der Ringinnenseite, von innen zu handhaben. Eine Handhabung von aussen oder von innen bietet den Vorteil einer sicheren Handhabung des Teilwerkstücks. Die Handhabungselemente weisen Verstellantriebe auf, mit welchen die Handhabungselemente zumindest dazu geeignet sind, Teilwerkstücke mit verschiedenen Grössen aufzunehmen. Die Verstellantriebe weisen jeweils vorzugsweise ein Hub von mindestens 10 mm oder besser von mindestens 50 mm, bevorzugt mindestens 100mm oder 150mm auf, um ein Anpassen des Manipulators an unterschiedliche Teilwerkstücke zu gewährleisten. Die Verstellerantriebe können vorzugsweise auch dazu geeignet sein, eine Vorspannung auf das Teilwerkstück beispielsweise von innen aufzubringen oder auch um eine kraftschlüssige Verbindung zwischen dem Manipulator mit dem Handhabungselement einerseits und dem Teilwerkstück andererseits herzustellen. Bei bevorzugten Ausführungsformen der Trennvorrichtung sind mindestens 3, bevorzugter mindestens 4 Handhabungselemente mit jeweils mindestens einem Verstellantrieb vorgesehen. Ausdrücklich von der Erfindung umfasst sind mindestens 6, mindestens 8 oder noch mehr Handhabungselemente.

Erfindungsgemäß umfassen die Verstellantriebe Spindelantriebe, wobei jeweils ein Verstellantrieb durch jeweils einen Spindelantrieb gebildet werden kann. Ein Spindelantrieb weist den Vorteil einer einfach arretierbaren Verstellmöglichkeit auf, wobei grosse Kräfte mit einer exakten Wegsteuerung auf das Teilwerkstück aufgebracht werden können. Die grossen Kräfte bieten den Vorteil, dass auch schwere Teilwerkstücke durch eine kraftschlüssige Verbindung angehoben werden können. Bevorzugte Ausführungsformen der Spindelantriebe weisen ein zentral an dem Manipulator angeordnetes Kegelrad auf, welches über ein Stirnradgetriebe die Spindelantriebe antreibt. Das zentrale Kegelrad bietet den Vorteil, dass es auf einer zentralen vertikalen Achse angeordnet werden kann, um welches dann die Handhabungselemente zusammen mit den Verstellantrieben rotieren und um welche Achse ebenso auch das Werkstück rotiert wird. Auf diese Weise wird auf einfache Art eine exakte und fluchtende Werkstück- und Teilwerkstück-Führung geschaffen. Andere, nicht erfindungsgemässe Ausführungsformen der Trennvorrichtung verwenden hydraulisch angetriebene Hubkolben als Verstellantriebe. Diese bieten den Vorteil, dass mit ihnen sehr grosse Kräfte, insbesondere auch kraftgesteuert, aufgebaut werden können.

Erfindungsgemäß weisen die Handhabungselemente Trennrollen auf. Die Trennrollen sind angeordnet, so dass sie das Teilwerkstück untergreifen, d. h. von unten stützen können. Dabei sind die Trennrollen in einem stützenden Zustand für das Teilwerkstück vorzugsweise um eine vertikale Achse drehbar. Bei mindestens einseitig kegelförmig ausgebildeten Trennrollen wird auf diese Weise ermöglicht, dass das Teilwerkstück auf einem definierten Kontaktpunkt auf der Trennrolle aufliegt. Die Trennrolle bietet den Vorteil, dass das Teilwerkstück beliebig bezüglich des Handhabungselements und damit bezüglich des Manipulators rotierbar ist. Vorzugsweise ist die Drehachse der Trennrollen verschwenkbar oder die Trennrollen sind an einem Greifarm um eine horizontale Achse nach oben klappbar. Dies bietet den Vorteil, dass das Teilwerkstück leicht freigegeben werden kann, indem die Trennrollen nach oben klappbar sind.

Vorteilhafterweise weist zumindest ein Teil der Handhabungselemente jeweils eine Anpressfläche auf. Diese Anpressflächen sind vorzugsweise von innen gegen das Teilwerkstück anlegbar. "Von innen" bedeutet in diesem Zusammenhang insbesondere, dass die Anpressflächen gegen die Innenseite des Teilwerkstücks oder des abgetrennten Ringes anlegbar sind. Das Anlegen der Anpressflächen erfolgt vorzugsweise mittels des Verstellantriebs. Durch Hübe der Verstellantriebe in dem oben angegebenen bevorzugten Bereichen wird ausserdem erreicht, dass mit einem Manipulatorkopf mit den daran angeordneten Handhabungselementen Metallringe verschiedener Durchmesser bewegt werden können.

Vorzugsweise ist der Ausleger des Manipulators, wobei der Manipulatorkopf an dem Ausleger befestigt ist, um eine im Wesentlichen vertikale Achse verschwenkbar. Auf diese Weise kann das abgetrennte Teilwerkstück leicht abgenommen werden.

Vorzugsweise umfasst die Abtrenneinrichtung eine Säge. Eine Säge oder insbesondere eine Rotationssäge mit einem Rotationssägeblatt bieten die Möglichkeit eines zuverlässigen und kostengünstigen Abtrennens des Teilwerkstücks. Die Rotationssäge weist vorzugsweise eine im Wesentlichen vertikale Rotationsachse auf. Weitere Möglichkeiten sind Trennscheiben oder Laser, mit welchen der Trennvorgang durchgeführt werden kann, d. h., dass typische Ausführungsformen eine Säge, eine Trennscheibe oder einen Laser umfassen. Laser bieten den Vorteil, dass sie eine im Wesentlichen verschleissfreie Trennung von Werkstücken ermöglichen.

Vorzugsweise umfasst die Trennvorrichtung eine Lagervorrichtung zur Aufnahme der Abtrenneinrichtung, wobei die Lagervorrichtung einen Vertikalantrieb und/oder einen Horizontalantrieb zum Verstellen der Abtrenneinrichtung aufweist. Damit wird es möglich, die Abtrenneinrichtung mit dem Werkstück in Eingriff zu bringen und ausserdem auch eine gewünschte Höhe des Angriffs des Werkzeugs der Abtrenneinrichtung an dem Werkstück einzustellen. Auf diese Weise können von einem Werkstück mehrere Teilwerkstücke nacheinander abgetrennt werden oder die Dicke des abzutrennenden Teilwerkstücks kann eingestellt werden. Die Lagervorrichtung weist vorzugsweise mindestens vier höhenverstellbare Fusselemente auf, um den Vertikalantrieb umzusetzen. Ein solcher Vertikalantrieb bietet eine sehr steife Lagerung bei gleichzeitiger Schaffung einer Möglichkeit einer vertikalen Verstellbarkeit. Es ist jedoch auch möglich, den Vertikalantrieb als Linearantrieb an einen Lagerblock auszuführen.

Vorteilhafterweise umfasst die Trennvorrichtung eine Bodenplatte, auf welcher der Manipulator und/oder die Trenneinheit angeordnet sind. Dabei sind der Manipulator oder die Trenneinheit vorzugsweise lösbar an der Bodenplatte bevorzugt in Führungsschienen angeordnet. Auf diese Weise ist es auch möglich, den Manipulator oder die Trenneinheit auf verschiedene Bodenplatten mit unterschiedlichen Grössen zu montieren, wobei dabei eine Adaptionsmöglichkeit an verschiedene Grössen von Karussell-Drehbänken geschaffen wird. Vorteilhafterweise sind der Manipulator oder die Trenneinheit verschiebbar auf der Bodenplatte angeordnet, wobei mit dem Begriff "oder" jeweils immer auch eine "und"-Kombination gemeint ist. Für die verschiebbare Anordnung sind vorzugsweise Führungen oder Führungsschienen angeordnet. Solche Führungen bieten den Vorteil, dass eine variable Anpassung an verschiedene Werkstückgrössen möglich ist. Vorteilhafterweise wird jeweils neben einer Karussell-Drehbank eine Bodenplatte angeordnet, welche auf die Grösse der Karussell-Drehbank abgestimmt ist. Die Bearbeitungseinheit umfasst vorzugsweise zumindest zwei Karussell-Drehbänke unterschiedlicher Grösse mit entsprechenden Bodenplatten, wobei ein Manipulator und eine Trenneinheit vorgesehen sind, welche jeweils auf einer der Bodenplatten montiert werden können. Auf diese Weise ist es möglich, mit nur einem Manipulator und einer Trenneinheit auf Karussell-Drehbänken verschiedener Grösse Werkstücke zu trennen. Umfasst sind dabei auch Anordnungen mit mehr als zwei Karussell-Drehbänken und mehr als zwei Bodenplatten. Durch einen Austausch oder ein Umsetzen von Trenneinheiten oder Lagervorrichtungen ergibt sich eine Anpassbarkeit an unterschiedliche Werkstückgrössen. Typische Ausführungsformen sehen eine Umhausung vor, mit welcher die Trennvorrichtung geschützt werden kann oder durch welche die Umgebung bspw. vor unvorhergesehen umherfliegenden Spänen geschützt werden kann.

Ein weiterer unabhängiger Gegenstand der Erfindung ist ein Trennverfahren zum Trennen von Werkstücken aus Metall, insbesondere von Metallringen. Das erfindungsgemässe Trennverfahren gemäss dem nebengeordneten unabhängigen Anspruch 9 wird vorzugsweise mit einer Trennvorrichtung in einer der oben beschriebenen bevorzugten Ausführungsform durchgeführt. Vorzugsweise wird eine für die Werkstückgrösse geeignete Karussell-Drehbank ausgesucht, weiter wird eine der Grösse nach geeignete Abtrenneinrichtung mit einem geeigneten Manipulatorkopf ausgewählt und diese auf eine neben der Karussell-Drehbank montierte Bodenplatte montiert und in den Führungen der Bodenplatte so eingestellt, dass das Werkstück bearbeitet werden kann.

### Figurenbeschreibung

Anschliessend werden bevorzugte Ausführungsformen der Erfindung anhand der beiliegenden Zeichnungen erläutert, wobei die Zeichnungen zeigen:
Figur 1 eine schematische Übersichtsskizze einer erfindungsgemässen Trennvorrichtung;
Figur 2 eine schematische Seitenansicht der Abtrenneinrichtung der Trennvorrichtung der Figur 1;
Figur 3 eine schematische Seitenansicht des Manipulators der Trennvorrichtung der Figur 1;
Figur 4 eine vergrösserte Ansicht einer Einzelheit des Manipulators der Figur 3; und
Figur 5 eine weitere bevorzugte Ausführungsform der Einzelheit des Manipulators der Figur 3.

### Beschreibung bevorzugter Ausführungsformen

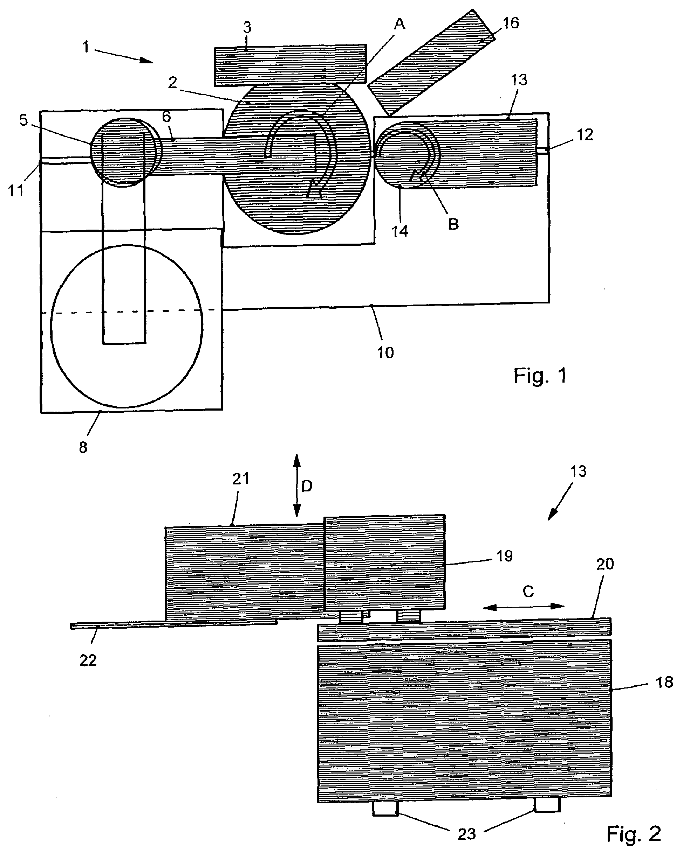

Nachfolgend werden anhand der Figuren 1 bis 5 bevorzugte Ausführungsformen einer erfindungsgemässen Trennvorrichtung beschrieben, wobei in den Zeichnungen für gleiche oder ähnliche Teile gleiche Bezugszeichen verwendet werden.

In der Figur 1 ist skizzenhaft eine erfindungsgemässe Trennvorrichtung 1 in einer schematischen Draufsicht gezeigt. Die Trennvorrichtung 1 umfasst eine Werkstückaufnahme 2, welche durch das Futter einer Karussell-Drehbank 3 gebildet wird. Die Werkstückaufnahme 2 kann in Richtung eines Pfeils A gedreht werden, so dass ein in der Werkstückaufnahme 2 aufgenommenes Werkstück, d.h. bevorzugt ein Metallring, in Richtung des Pfeils A gedreht wird.

Weiter umfasst die Trennvorrichtung 1 einen Manipulator 5, welcher einen Ausleger 6 aufweist. An dem Ausleger 6 kann ein Manipulatorkopf befestigt werden, wobei der Manipulatorkopf im Zusammenhang mit einer der weiteren Figuren beschrieben wird. Der Manipulator 5 ist in der Figur 1 in zwei Stellungen gezeigt, nämlich in einer ersten Stellung, bei welcher der Ausleger 6 angeordnet ist, so dass mit dem Manipulator 5 ein von dem Werkstück abgetrenntes Teilwerkstück aufgenommen werden kann. Ausserdem ist der Manipulator 5 in einer zweiten Position gezeigt, in welcher er um 90° gegenüber der ersten Position verschwenkt ist, und in welcher er das abgetrennte und aufgenommene Teilwerkstück in einem Zwischenlager 8 abstellen kann. Der Manipulator 5 ist auf einer Bodenplatte 10 in einer Manipulatorführungsschiene 11 befestigt. Es ist möglich, den Manipulator 5 in der ManipulatorFührungsschiene 11 an verschiedenen Positionen auf der Bodenplatte 10 zu befestigen, um eine exakte Anpassung der Lage des Manipulators 5 an die Lage der Karussell-Drehmaschine 3 herzustellen. Die Bodenplatte 10 ist üblicherweise fest mit demselben Untergrund verbunden, auf welchem auch die Karussell-Drehmaschine 3 befestigt ist.

Ausserdem ist an der Bodenplatte 10 in einer Abtrenneinrichtung-Führungsschiene 12 eine Abtrenneinrichtung 13 befestigt. Wiederum kann die Abtrenneinrichtung 13 durch Positionierung in der Abtrenneinrichtung-Führungsschiene 12 geeignet positioniert werden. Die Abtrenneinrichtung 13 umfasst ein Rotationssägeblatt 14, welches in Richtung eines Pfeils B rotieren lässt. Die Abtrenneinrichtung 13 weist ausserdem Verstellelemente und Vorschubeinrichtungen auf, mit welchen sich das Rotationssägeblatt 14 in Eingriff mit dem in der Werkstückaufnahme 2 aufgenommen Werkstück bringen lässt. Die Einzelheiten diesbezüglich werden im Zusammenhang mit den folgenden Figuren beschrieben. Zum Abtransport von Sägespänen, welche beim Eingriff des Rotationssägeblatts 14 mit dem Werkstück entstehen, ist ein Spanabtransportwagen 16 vorgesehen.

Zu der Bodenplatte 10 und der Karussell-Drehbank 3 sollte angemerkt werden, dass auch Manipulatoren oder Abtrenneinrichtungen anderer Grössen auf der Bodenplatte 10 der Karussell-Drehbank 3 zugeordnet werden können. Weiterhin ist das Futter der Werkstückaufnahme 2 austauschbar gestaltet oder lässt sich für Werkstücke verschiedener Grössen in einem weitem Bereich anpassen, so dass mit der dargestellten Trennvorrichtung 1, eventuell unter Austausch einiger Teile, Werkstücke und insbesondere Metallringe mit stark unterschiedlichen Grössen bearbeiten lassen.

In der Figur 2 ist die Abtrenneinrichtung 13 der Figur 1 in einer schematischen Seitenansicht genauer dargestellt. Die Abtrenneinrichtung 13 umfasst eine Lagervorrichtung, die einen ersten Lagerblock 18 und einen zweiten Lagerblock 19 umfasst. Der zweite Lagerblock 19 ist auf dem ersten Lagerblock 18 mit einem Linearantrieb 20 (horizontaler Antrieb) angeordnet, so dass der zweite Lagerblock 19 in Richtung eines Pfeils C gegenüber dem ersten Lagerblock 18 verfahren werden kann. An dem zweiten Lagerblock 19 ist ein Sägenantrieb 21 (vertikaler Antrieb) befestigt. Der Sägenantrieb 21 kann gegenüber dem zweiten Lagerblock 19 vertikal in Richtung eines Pfeils D verfahren werden: Der Hub des Linearantriebs 20 beträgt vorzugsweise mindestens 500 mm und der Hub des Antriebs für die vertikale Einstellung in Richtung des Pfeils D beträgt vorzugsweise mindestens 200 mm. An dem Sägenantrieb 21 ist ein RotationsSägeblatt 22 lösbar befestigt. Das Sägeblatt 22 weist einen Durchmesser von etwa 500 mm auf, wobei Sägeblätter mit mindestens 300 mm allgemein bevorzugt werden. Durch die beiden Verstellmöglichkeiten entlang der Pfeile C und D ist die Abtrenneinrichtung 13 in der Lage, dass Werkstück auf unterschiedlichen Höhen mit einer horizontalen Vorschubrichtung und einer horizontalen Schneidebene (Pfeil C) zu trennen. Durch die Aufnahme der Abtrenneinrichtung 13 mit Führungsfüssen 23 in der Abtrenneinrichtung-Führungsschiene 12 (Figur 1) ergeben sich ausserdem Anpassmöglichkeiten an verschiedene Grössen von Werkstücken oder Durchmessern von zu trennenden Metallringen.

Durch ein Arretieren der Verstellmöglichkeiten entlang der Pfeile C und D und ein anschliessendes Betätigen der jeweiligen Antriebe gegen die Arretierung lassen sich Spieltoleranzen beim Einstellen der jeweiligen Koordinaten verringern. Dies gilt allgemein analog auch für andere Antriebe der erfindungsgemässen Abtrennvorrichtung.

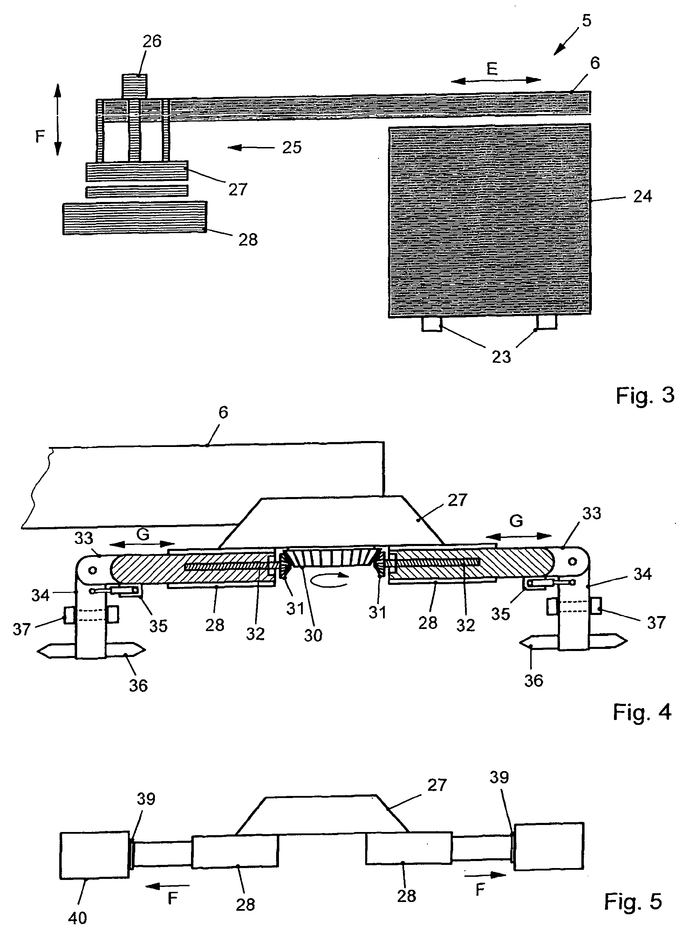

In der Figur 3 ist der Manipulator 5 der Figur 1 genauer dargestellt. Der Manipulator 5 weist ebenfalls Führungsfüsse 23 auf, mit denen der Manipulator 5 in der Manipulatorführungsschiene 11 an verschiedenen Positionen befestigt werden kann. Die Führungsfüsse 23 sind an einem Manipulatorgrundelement 24 angeordnet, dass eine steife und zuverlässige Lagerung für den Ausleger 6 des Manipulators 5 bereitstellt. Der Ausleger 6 ist in horizontaler Richtung verschieblich auf dem Manipulatorgrundelement 24 gelagert. Dies ist durch einen Pfeil E angedeutet. Ausserdem lässt sich der Ausleger 6 gegenüber dem Manipulatorgrundelement 24 drehen, wie bereits in der Figur 1 gezeigt.

An dem Ausleger 6 ist ein Manipulatorkopf 25 angeordnet. Der Manipulatorkopf 25 ist lösbar und austauschbar an dem Ausleger 6 befestigt, so dass auch andere Manipulatorköpfe an dem Ausleger 6 befestigt werden können, beispielsweise solche für Ringe mit unterschiedlichem Durchmesser bzw. mit unterschiedlichem Innendurchmesser. Der Manipulatorkopf 25 verfügt über einen Servoantrieb 26, mit welchem sich ein Drehverteiler 27 in vertikaler Richtung in Richtung eines Pfeils F verfahren lässt. Der Hub des Servoantriebs beträgt vorzugsweise mindestens 300 mm, im dargestellten Ausführungsbeispiel sind es 500 mm. An dem Drehverteiler 27 sind lösbar Handhabungselemente 28 angeordnet, mit denen ein Teilwerkstück angehoben werden kann. Die Handhabungselemente 28 sind in der Figur 3 lediglich schematisch dargestellt. In der anschliessenden Figurenbeschreibung der Figuren 4 und 5 werden beispielhafte und bevorzugte Handhabungselemente beschrieben.

Es sollte angemerkt werden, dass an dem Drehverteiler 27 bzw. an dem Servoantrieb 26 verschiedene Handhabungselemente 28 für unterschiedliche Anwendungen und für unterschiedliche Ringgrössen angeordnet werden können.

In der Figur 4 ist eine Einzelheit der Figur 3 genauer dargestellt, wobei die Figur 4 dazu dient, eine Ausführungsform der Handhabungselemente 28 zu erläutern. In der Figur 4 ist der Übersichtlichkeit halber der Servoantrieb 26 nicht gezeigt. Die Handhabungselemente 28 sind an dem Drehverteiler 27 befestigt, wobei der Drehverteiler 27 ein Kegelrad 30 aufweist, welches wiederum Spindelantriebskegelräder 31 von Spindelantrieben 32 der Handhabungselemente 28 antreibt. Mit den Spindelantrieben 32 können Arme 33 der Handhabungselemente 28 radial um wenigstens 200 mm Hub verfahren werden. Der Hub ist durch Pfeile G schematisch dargestellt.

An den Armen 33 sind Greifarme 34 gelenkig befestigt, wobei die Greifarme 34 mittels Verschwenkantrieben 35 verschenkt werden können. An den Greifarmen 34 sind kegelförmige Trennrollen 36 drehbar gelagert, die dazu geeignet sind, in einen Sägespalt zwischen dem Werkstück und dem Teilwerkstück einzugreifen. Durch die die Drehbarkeit der kegelförmige Trennrollen 36 kann das Teilwerkstück, solange es noch nicht vollständig von dem Werkstück abgetrennt ist, zusammen mit dem Werkstück relativ zu dem Ausleger 6 gedreht werden, ohne dass eine exakte Rotations-Synchronisation der Handhabungselemente 28 notwendig ist, um Verspannungen zu vermeiden. An den Greifarmen 34 sind ausserdem noch Abstandsrollen 37 angeordnet, welche zuverlässig eine Positionierung des Teilwerkstücks in horizontaler Richtung relativ zu den Greifarmen 34 erreichen. Ein Loslassen des Teilwerkstücks auf dem Zwischenlager 8 (Figur 1) erfolgt durch Verschwenken der Greifarme 34 nach aussen.

In der Figur 5 ist skizzenhaft eine andere, nicht erfindungsgemäße Ausführungsform von Handhabungselementen 28 dargestellt. In der Figur 5 sind die Handhabungselemente 28 als Hydraulikkolben ausgebildet, welche über Anpressflächen 39 verfügen, mit denen ein Druck auf ein Teilwerkstück 40 aufgebracht werden kann, um das Teilwerkstück 40 zu handhaben. Das Teilwerkstück 40 besteht aus einem Ring, der, wie die übrigen in der Figur 5 dargestellten Teile, skizzenhaft in einer Schnittansicht dargestellt ist. Durch Spannen der Hydraulikkolben der Handhabungselemente 28 kann jeweils eine Druckkraft F von innen auf das Teilwerkstück 40 aufgebracht werden.

Allgemein sollte angemerkt werden, dass die in den Figuren 4 und 5 dargestellten Ausführungsbeispiele jeweils über vier Handhabungselemente 28 verfügen, sodass das Teilwerkstück 40 mit der in der Figur 5 dargestellten Ausführungsform durch die Verspannung von Innen auch gegen ein Schwingen oder ähnliches stabilisiert wird. Der Hub der Handhabungselemente 28 der Figur 5 beträgt wiederum bevorzugt mindestens 200 mm.

**Bezugszeichenliste**

| | | | | | |
|---|---|---|---|---|---|
| 1 | Trennvorrichtung | 34 | Greifarme | 67 | |
| 2 | Werkstückaufnahme | 35 | Verschwenkantriebe | 68 | |
| 3 | Karussell-Drehbank | 36 | Trennrollen | 69 | |
| 4 | | 37 | Abstandsrollen | 70 | |
| 5 | Manipulator | 38 | | 71 | |
| 6 | Ausleger | 39 | Anpressflächen | 72 | |
| 7 | | 40 | | 73 | |
| 8 | Zwischenlager | 41 | | 74 | |
| 9 | | 42 | | 75 | |
| 10 | Bodenplatte | 43 | | 76 | |
| 11 | Manipulatorführungsschiene | 44 | | 77 | |
| 12 | Abtrenneinrichtung-führungsschiene | 45 | | 78 | |
| 13 | Trenneinheit | 46 | | 79 | |
| 14 | Rotationssägeblatt | 47 | | | |
| 15 | | 48 | | | |
| 16 | Spanabtransportwagen | 49 | | | |
| 17 | | 50 | | | |
| 18 | erster Lagerblock | 51 | | | |
| 19 | zweiter Lagerblock | 52 | | | |
| 20 | Linearantrieb | 53 | | | |
| 21 | Sägeantrieb | 54 | | | |
| 22 | | 55 | | | |
| 23 | Führungsfüsse | 56 | | | |
| 24 | Manipulatorgrundelement | 57 | | | |
| 25 | Manipulatorkopf | 58 | | | |
| 26 | Servoantrieb | 59 | | | |
| 27 | Drehverteiler | 60 | | | |
| 28 | Handhabungselemente | 61 | | | |
| 29 | 62 | 62 | | | |
| 30 | Kegelrad | 63 | | | |
| 31 | Spindelantriebskegelräder | 64 | | | |
| 32 | Spinelantriebe | 65 | | | |
| 33 | Arme | 66 | | | |

## Patentansprüche

1. Trennvorrichtung (1) zum Trennen von kreisförmigen Scheiben und/oder Ringen aus Metall, mit
- einer Werkstückaufnahme (2) zur Aufnahme des Werkstücks,
- einer Abtrenneinrichtung zum Abtrennen eines Teilwerkstücks von dem in der Werkstückaufnahme (2) aufgenommenen Werkstück,
wobei
- die Abtrenneinrichtung eine im Wesentlichen horizontale Schneidebene aufweist und/oder
- die Abtrenneinrichtung und/oder die Werkstückaufnahme (2) angeordnet sind, so dass das Teilwerkstück von dem in der Werkstückaufnahme (2) aufgenommenen Werkstück im Wesentlichen horizontal abgetrennt wird,
und wobei
- die Trennvorrichtung (1) einen Manipulator (5) zum Handhaben des abzutrennenden Teilwerkstücks hat, wobei dieser Handhabungselemente (28) aufweist, die geeignet sind, das Teilwerkstück von außen und/oder in einer Ausnehmung des Teilwerkstücks von innen zu handhaben, wobei die Handhabungselemente (28) Verstellantriebe aufweisen,
**dadurch gekennzeichnet,**
**dass** zumindest einer der Verstellantriebe einen Spindelantrieb (32) aufweist und dass zumindest eines der Handhabungselemente (28) eine Trennrolle (36) und/oder eine Abstandsrolle (37) aufweist.

2. Trennvorrichtung (1) nach Anspruch 1, **dadurch gekennzeichnet, dass** die Werkstückaufnahme (2) und die Abtrenneinrichtung derart angeordnet sind, dass sich das Teilwerkstück oberhalb der Schneidebene befindet.

3. Trennvorrichtung (1) nach Anspruch 1 oder 2, **dadurch gekennzeichnet, dass** der Manipulator (5) einen Manipulatorkopf (25) umfasst, der an einem oberhalb der Werkstückaufnahme (2) angeordneten Ausleger (6) des Manipulators (5) angeordnet ist.

4. Trennvorrichtung (1) nach Anspruch 1 oder 3, **dadurch gekennzeichnet, dass** der Manipulator (5) eine Abstützung aufweist, mit welcher der Manipulator (5) nach unten gegenüber einem Widerlager abstützbar ist.

5. Trennvorrichtung (1) nach einem der Ansprüche 1 bis 4, **dadurch gekennzeichnet, dass** zumindest eines der Handhabungselemente (28) Anpressflächen (39) aufweist.

6. Trennvorrichtung (1) nach einem der vorhergehenden Ansprüche, **dadurch gekennzeichnet, dass** die Abtrenneinrichtung eine Säge umfasst.

7. Trennvorrichtung (1) nach einem der vorhergehenden Ansprüche, **dadurch gekennzeichnet, dass** die Abtrenneinrichtung eine Lagervorrichtung umfasst, wobei die Lagervorrichtung einen Vertikalantrieb und/oder einen Horizontalantrieb zum Verstellen aufweist.

8. Trennvorrichtung (1) nach einem der vorhergehenden Ansprüche, **gekennzeichnet durch** eine Bodenplatte (10), auf welcher der Manipulator (5) und/oder die Abtrenneinrichtung angeordnet sind.

9. Trennverfahren zum Trennen von Werkstücken aus Metall, insbesondere von Metallringen, mit einer Trerinvorrichtung nach den Ansprüchen 1 bis 8, mit den Schritten:
- Aufnahme des Werkstücks einer Werkstückaufnahme (2),
- Abtrennen eines Teilwerkstücks von dem in der Werkstückaufnahme (2) aufgenommenen Werkstück, wobei
- das Teilwerkstück von dem in der Werkstückaufnahme (2) aufgenommenen Werkstück im Wesentlichen horizontal abgetrennt wird.

## Claims

1. A separating device (1) for separating circular discs and/or rings made of metal, with
- a workpiece receptacle (2) for receiving the workpiece,
- a severing means for severing a partial workpiece from the workpiece received in the workpiece receptacle (2),
wherein
- the severing means has a substantially horizontal cutting plane and/or
- the severing means and/or the workpiece receptacle (2) are arranged so that the partial workpiece is severed substantially horizontally from the workpiece received in the workpiece receptacle (2),
and wherein
- the separating device (1) has a manipulator (5) for handling the partial workpiece which is to be separated off, said manipulator having handling elements (28) which are suitable for handling the partial workpiece from the outside and/or in a cutout in the partial workpiece from the inside, the handling elements (28) having adjustment drives,
**characterised in that** at least one of the adjustment drives has a spindle drive (32) and **in that** at least one of the handling elements (28) has a severing roller (36) and/or a spacer roller (37).

2. A separating device (1) according to Claim 1, **characterised in that** the workpiece receptacle (2) and the severing means are arranged such that the partial workpiece is located above the cutting plane.

3. A separating device (1) according to Claim 1 or 2, **characterised in that** the manipulator (5) comprises a manipulator head (25) which is arranged on an extension arm (6) of the manipulator (5) which is arranged above the workpiece receptacle (2).

4. A separating device (1) according to Claim 1 or 3, **characterised in that** the manipulator (5) has a support means with which the manipulator (5) can be supported underneath relative to an abutment.

5. A separating device (1) according to one of Claims 1 to 4, **characterised in that** at least one of the handling elements (28) has contact-pressure surfaces (39).

6. A separating device (1) according to one of the preceding claims, **characterised in that** the severing means comprises a saw.

7. A separating device (1) according to one of the preceding claims, **characterised in that** the severing means comprises a bearing device, the bearing device having a vertical drive and/or a horizontal drive for adjustment purposes.

8. A separating device (1) according to one of the preceding claims, **characterised by** a bottom plate (10) on which the manipulator (5) and/or the severing means is are arranged.

9. A separating method for separating workpieces made of metal, in particular metal rings, with a separating device according to Claims 1 to 8, comprising the steps:
- receiving the workpiece of a workpiece receptacle (2),
- severing a partial workpiece from the workpiece received in the workpiece receptacle (2),
wherein
- the partial workpiece is severed substantially horizontally from the workpiece received in the workpiece receptacle (2).

## Revendications

1. Dispositif de séparation (1) pour la séparation de disques circulaires et/ou de bagues métalliques, avec
- un support de pièce (2) destiné à recevoir la pièce à usiner,
- un moyen de séparation destiné à séparer une pièce partielle de la pièce à usiner reçue dans le support de pièce (2),
dans lequel
- le moyen de séparation présente un plan de coupe sensiblement horizontal, et/ou
- le moyen de séparation et/ou le support de pièce (2) sont disposés de sorte que la pièce partielle soit séparée de manière sensiblement horizontale de la pièce à usiner reçue dans le support de pièce (2),
et dans lequel
- le moyen de séparation (1) présente un manipulateur (5) destiné à manipuler la pièce partielle à séparer, ce dernier présentant des éléments de manipulation (28) qui sont à même de manipuler la pièce partielle de l'extérieur et/ou, dans un évidement de la pièce partielle, de l'intérieur, les éléments de manipulation (28) présentant des entraînements de déplacement,
**caractérisé par le fait que**
au moins l'un des entraînements de déplacement présente un entraînement de broche (32) et au moins l'un des éléments de manipulation (28) présente un rouleau de séparation (36) et/ou un rouleau d'écartement (37).

2. Dispositif de séparation (1) selon la revendication 1, **caractérisé par le fait que** le support de pièce (2) et le moyen de séparation sont disposés de sorte que la pièce partielle se situe au-dessus du plan de coupe.

3. Dispositif de séparation (1) selon la revendication 1 ou 2, **caractérisé par le fait que** le manipulateur (5) comprend une tête de manipulateur (25) qui est disposée sur un bras (6) du manipulateur (5) disposé au-dessus du support de pièce (2).

4. Dispositif de séparation (1) selon la revendication 1 ou 3, **caractérisé par le fait que** le manipulateur (5) présente un support par lequel le manipulateur (5) peut être supporté vers le bas par rapport à une butée.

5. Dispositif de séparation (1) selon l'une des revendications 1 à 4, **caractérisé par le fait qu'**au moins l'un des éléments de manipulation (28) présente des surfaces de poussée (39).

6. Dispositif de séparation (1) selon l'une des revendications précédentes, **caractérisé par le fait que** le dispositif de séparation comporte une scie.

7. Dispositif de séparation (1) selon l'une des revendications précédentes, **caractérisé par le fait que** le dispositif de séparation comporte un dispositif de palier, le dispositif de palier comportant un entraînement vertical et/ou un entraînement horizontal destiné à permettre le déplacement.

8. Dispositif de séparation (1) selon l'une des revendications précédentes, **caractérisé par** une plaque de fond (10) sur laquelle sont disposés le manipulateur (5) et/ou le moyen de séparation.

9. Procédé de séparation pour séparer des pièces en métal, en particulier des bagues métalliques, avec un dispositif de séparation selon les revendications 1 à 8, aux étapes consistant à:
- recevoir la pièce à usiner dans un support de pièce (2),
- séparer une pièce partielle de la pièce à usiner reçue dans le support de pièce (2), dans lequel
- la pièce partielle est séparée de manière sensiblement horizontale de la pièce à usiner reçue dans le support de pièce (2).
